# EUROPEAN PATENT SPECIFICATION

(11) **EP 4 505 770 B1**
(45) Date of publication and mention of the grant of the patent: **25.03.2026**
(21) Application number: 23721007.5
(22) Date of filing: 06.04.2023
(51) Int. Cl.: H04W 8/20, H04W 48/18, H04W 60/00

(54) **REGISTRATION WITH NETWORK SLICES NOT SUPPORTED IN WHOLE REGISTRATION AREA**
REGISTRIERUNG MIT NICHT IN EINEM GANZEN REGISTRIERUNGSBEREICH UNTERSTÜTZTEN NETZWERK-SLICES
ENREGISTREMENT AVEC DES TRANCHES DE RÉSEAU NON PRISES EN CHARGE DANS UNE ZONE D'ENREGISTREMENT COMPLÈTE

(30) Priority: 07.04.2022 US 202263328454 P
(43) Date of publication of application: 12.02.2025
(73) Proprietor: Telefonaktiebolaget LM Ericsson (publ), 164 83 Stockholm (SE)
(72) Inventor: FOTI, George, Québec H9G 2Z8 (CA); HEDMAN, Peter, 252 50 Helsingborg (SE)
(74) Representative: Ericsson
(86) International application number: PCT/IB2023/053548
(87) International publication number: WO 2023/194956

(56) References cited:
- EP-A1- 3 993 466
- WO-A1-2021/021423
- WO-A1-2021/200234
- WO-A1-2021/241905
- US-A1- 2018 368 061
- US-A1- 2019 029 065
- US-A1- 2022 232 507

## Description

### Related Applications

This application claims the benefit of provisional patent application serial number 63/328454, filed on 4/7/2022.

### Technical Field

The present disclosure relates to Network Slices in a telecommunication system and more specifically to network slice availability in the telecommunication system.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Third Generation Partnership Project (3GPP) Technical Specification (TS) 23.501 V17.4.0 and TS 23.502 V17.4.0 define, among other things, describe network slices in 5G networks. In particular, a network slice is described as a logical network that provides specific network capabilities and network characteristics. Network slicing is also supported in telecommunication networks supporting 4G access (e.g., LTE) and is expected to be supported in telecommunications network supporting 6G access and subsequent generations of access technology. This document describes the solution based on the 5G network supporting 5G access (NR); however, as indicated, it will be understood to a skilled person in the art that the solution could be applicable to any of the telecommunication network supporting network slices over any cellular access network of different access technology (e.g., 4G, 5G, 6G, etc).

The telecommunication network currently known as 5G network is either a public Land Mobile Network, PLMN, or a Stand-alone Non-public networks (SNPN).

In 5G, a network slice is identified by an S-NSSAI, where an S-NSSAI is comprised of:
- A Slice/Service type (SST), which refers to the expected Network Slice behavior in terms of features and services;
- A Slice Differentiator (SD), which is optional information that complements the Slice/Service type(s) to differentiate amongst multiple Network Slices of the same Slice/Service type.

There are different network slices including:
a. Allowed network slices (NSSAI): Indicating the S-NSSAIs values a wireless device/User Equipment (UE) could use in the Serving PLMN in the current Registration Area (RA).
b. Configured NSSAI: NSSAI (indicating one or more S-NSSAI) provisioned in the UE applicable to one or more PLMNs. A Configured NSSAI may either be configured by a Serving PLMN (or SNPN) and apply to the Serving PLMN (or SNPN), or may be a Default Configured NSSAI configured by the HPLMN (or SNPN) and that applies to any PLMNs (or SNPNs) for which no specific Configured NSSAI has been provided to the UE. There is at most one Configured NSSAI per PLMN (or SNPN).
c. Requested NSSAI: NSSAI (indicating one or more S-NSSAI) provided by the UE to the Serving PLMN (or SNPN) during registration.
d. Rejected NSSAI for the current Registration Area or PLMN/SNPN.

Currently, in 5G, when providing a Requested NSSAI to the network upon registration, the S-NSSAIs in the Requested NSSAI are part of the Configured and/or Allowed NSSAIs applicable for this PLMN (or SNPN), when they are available. If no Configured NSSAI and Allowed NSSAI for the PLMN (or SNPN) are available, the S-NSSAIs in the Requested NSSAI correspond to the Default Configured NSSAI, if configured in the wireless device/UE. Upon successful completion of the wireless device/UE's Registration procedure over an Access Type, the wireless device/UE obtains from the AMF an Allowed NSSAI for this Access Type, which includes one or more S-NSSAIs and, if needed, their mapping to the HPLMN (or SNPN) S-NSSAIs. These S-NSSAIs are valid for the current Registration Area and Access Type provided by the Access and Mobility Management function (AMF), the wireless device/UE has registered with and can be used simultaneously by the wireless device/UE (up to the maximum number of simultaneous Network Slice instances or PDU Sessions).

The wireless device/UE might also obtain one or more rejected S-NSSAIs with cause and validity of rejection from the AMF. An S-NSSAI may be rejected:
- for the entire PLMN; or
- for the current Registration Area represented by a list of tracking area (TA identifier, TAI, list).
The S-NSSAIs that the wireless device/UE provides in the Requested NSSAI which are neither in the Allowed NSSAI nor provided as a rejected S-NSSAI, shall, by the wireless device/UE, not be regarded as rejected, i.e., the wireless device/UE may request to register these S-NSSAIs again next time the wireless device/UE sends a Requested NSSAI.
Furthermore, the Allowed NSSAI received in a Non Access Stratum (NAS) Registration Accept message or a NAS UE Configuration Update Command applies to a PLMN when at least a TAI of this PLMN is included in the Registration Area/TAI list included in this Registration Accept message or UE Configuration Update Command. If the UE Configuration Update Command contains an Allowed NSSAI but not a TAI List, then the last received RA/list of Tracking Area, TAI list, applies for the decision on which PLMN(s) the Allowed NSSAI is applicable. If received, the Allowed NSSAI for a PLMN and Access Type and any associated mapping of this Allowed NSSAI to HPLMN S-NSSAIs shall be stored in the wireless device/UE.
In addition, the AMF may provide the wireless device/UE with a new Configured NSSAI for the Serving PLMN, associated with mapping of the Configured NSSAI to HPLMN S-NSSAIs as specified in clause 5.15.4.1 of TS 23.501.
WO 2021/200234 A1 discloses an AMF apparatus receiving a registration request message from a UE via a RAN node, wherein in response to receiving the registration request message, the AMF apparatus sends to the UE via the RAN node a registration accept message indicating a registration area of the UE and a first list of at least one conditionally allowed network slice identifier. The registration area is a list of at least one tracking area. Each conditionally allowed network slice identifier is not available in every part of the registration area, but is available in at least one particular cell or at least one particular tracking area included in the registration area.
US 2019/029065 A1 discloses a method for a user equipment to update a policy in a wireless communication system including transmitting a first registration request message to an access and mobility management function (AMF), wherein the first registration request message includes requested network slice selection assistance information (NSSAI) including single (S)-NSSAI corresponding to a network slice with which the user equipment wants to register; receiving a first registration accept message as a response to the first registration request message from the AMF, wherein the first registration accept message includes an allowed NSSAI including at least one S-NSSAI allowed by the AMF; and requesting the update of a network slice selection policy (NSSP) associated with new S-NSSAI from the AMF when the new S-NSSAI not included in the requested NSSAI is included in the allowed NSSAI and the NSSP associated with the new S-NSSAI is not present.

### Summary:

Certain aspects of the present disclosure and their embodiments may provide solutions to the aforementioned or other challenges described within the context of a 5G network, although can be extended to other future networks such as 6G and beyond and even in legacy networks supporting network slices as dedicated networks in 4G networks.

According to the present disclosure, methods and a wireless device according to the independent claims are provided. Developments are set forth in the dependent claims. Embodiments disclosed herein include methods and apparatus for enabling a wireless device/UE to obtain from a network function (Access and Mobility management in addition to network slices uniformly available across a whole RA, network slices that are not uniformly available in the whole registration area, but available in only one or more tracking areas that are either part of the tracking areas forming the RA or one or more tracking areas that are outside the RA.

### Brief Description of the drawings:

The accompanying drawing figures incorporated in and forming a part of this specification illustrate several aspects of the disclosure, and together with the description serve to explain the principles of the disclosure.
Figure 1 illustrates examples of RA and SRA deployment in accordance with some embodiments.
Figure 2 illustrates one example of a cellular communications system in which embodiments of the present disclosure can be implemented;
Figure 3 illustrate example embodiments in which the cellular communication system of Figure 1 is a Fifth Generation (5G) System (5GS);
Figure 4 illustrate the service-based interface (SBI) architecture view of the (5G) System (5GS) of Figure 3;
Figures 5 illustrates a procedure in accordance with some embodiment of the present disclosure;
Figures 6 illustrates a method in a wireless device in accordance another embodiment of the present disclosure;
Figure 7 illustrates a method in a core network node in accordance with some embodiments of the present disclosure; and
Figures 8, 9, and 10 are schematic block diagrams of example embodiments of a network node.
Figure 11, 12 are schematic block diagrams of example embodiments of a wireless device.

### Detailed Description

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node/server/distributed servers/dedicated platform that implements one or more core network function also referred to as Network Function. Some examples of Network Function include, e.g., a Mobility Management Entity (MME), a Packet Data Network Gateway (P-GW), a Service Capability Exposure Function (SCEF), a Home Subscriber Server (HSS), or the like. Some other examples of a Network Function include a node implementing an Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), SMF+PGW controller, and Network slice admission control function (NSACF) or the like. In general, a network function can be implemented either as a network element on a dedicated hardware, as a software instance running on a dedicated hardware, or as a virtualised function instantiated on an appropriate platform, e.g. on a cloud infrastructure.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

There currently exist certain challenge(s). More specifically, as indicated above, when a UE initiates initial Registration with the 5G Core network over NAS and receives back the Registration Accept message; the received allowed S-NSSAIs (allowed NSSAI) are assumed to be available in all the TAs of the Registration Area (RA). The received Rejected S-NSSAIs for the RA are assumed to not be available in the whole RA. Hence, the UE is currently not allowed to request to register the network slices that are rejected for the RA as long as the UE is located in the RA that is received in the Registration Accept. The UE is also not allowed to use the rejected network slice when requesting establishment of a Packet Data Unit (PDU) Session.

This poses certain limitations. Accommodating more of the subscribed/configured/requested slices requires the network node (e.g., AMF in 5G) to create a smaller smaller RA with TAs supporting all of the allowed network slices and the number of supported slices per UE may increase. This, however, has the drawback to increase mobility registration updates due to a smaller RA, causing signaling load in the AMF and for the UE and other network functions of the telecommunication network involved to handle the additional registration procedures.

An AMF may want to create a RA that considers the trade-off between being large enough to limit the signaling from Mobility Registration Updates of the UEs and small enough to limit the paging load in case the UE needs to be paged. In this trade-off, the AMF includes TAs supporting some of the UE's S-NSSAIs of the Configured NSSAI or Subscribed S-NSSAIs or requested S-NSSAIs which are not defined to be available/supported uniformly across the RA, i.e., in the current art, if the UE requests those S-NSSAIs they would be rejected by the network (AMF). Therefore, the solution enables the UE to request the S-NSSAIs, only where they are defined to be available/supported in at least one TA.

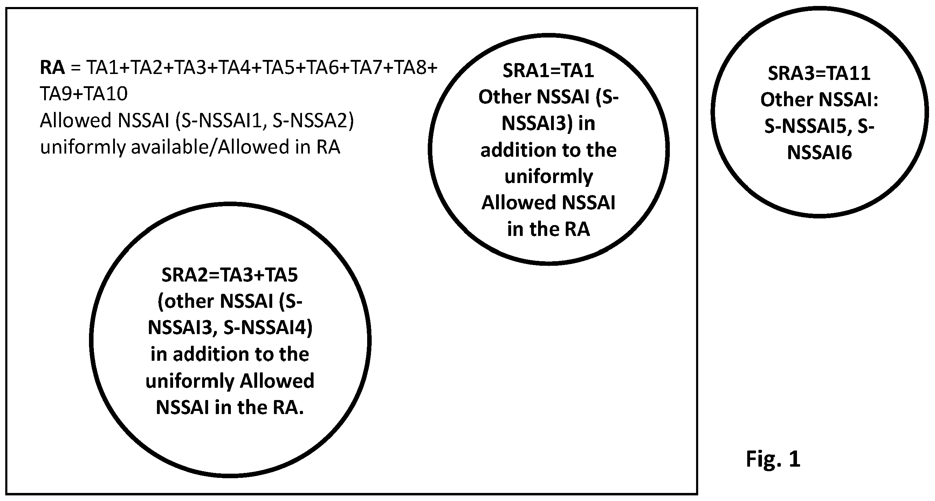

To enable the above, the notion of secondary Registration Area (SRA) is introduced herein. It will be understood that an SRA is used to describe an area defined by a list of one or more tracking areas where the UE is also considered registered. Two types of SRAs are described: SRA subset of RA. i.e., overlapping SRA, i.e., tracking areas of the SRA are also tracking areas of the RA and disjoint SRA, i.e., tracking areas of the SRA is/are not part of the RA. Figure 1 illustrates some examples of RA and SRA deployment as described herein.

### SRA subset of RA (overlapping SRA):

The current RA provided to the UE as a list of TAs, comprises one or more SRA. Each SRA, being subset of the RA, i.e., partially overlapping SRA where the coverage partially overlaps with the RA and is defined by one or more TA of the TA list describing the RA. The RA may be completely overlapped by two or more SRAs (not shown in Figure 1), or the RA may be partially overlapped by one or more SRA, e.g., SRA1 and SRA2 (Figure 1). The SRA supports S-NSSAIs that are uniformly available or supported across the SRA but not uniformly available across the whole RA. The S-NSSAI(s) that is uniformly available across one or more SRA is herein referred to as SRA network slice(s) and are provided to the UE in the Registration Accept message as allowed network slices in the one or more SRA and are considered, at completion of the registration procedure, as registered SRA network slice(s). The UE is allowed to use an SRA network slice as long as the UE is located in the SRA supporting the SRA network slice.

In addition to the SRA network slice, when the SRA is a subset of the RA (overlapping coverage), the SRA also inherits support of the uniformly available S-NSSAI across the RA (RA Allowed NSSAI) as the SRA is part of the RA (i.e., consists in part of one or more TA of the TAI List IE included in the Registration Accept message). The uniformly available S-NSSAI across the RA are described in the current Allowed NSSAI information element (IE) included in the NAS Registration Accept and optionally/or Configured NSSAI IE included in the NAS Registration Accept or NAS UE Configuration Command.

### Disjoint SRA:

In addition to being able to provide to the UE one or more SRA that is a subset of the RA, the UE may be provided with one or more SRA that is disjoint from the RA. The one or more SRAs is referred to as disjoint SRA and is represented by other one or more tracking area (TA) that is not part of the RA. The disjoint SRA does not inherit support of the RA Allowed NSSAI and each disjoint SRA supports one more SRA network slice not supported uniformly across the RA and may include one or more S-NSSAI that is considered as rejected S-NSSAI in the RA and/or one or more S-NSSAI that is supported by the AMF but available in TAs outside the defined RA provided to the UE, e.g., SRA 3 in Figure 1

Regardless of the type of SRA (overlapping or disjoint), the Registration procedure may also include an indication of rejected slices per SRA indicating network slices (i.e., S-NSSAI(s)) that can't be used in the SRA. SRA network slices in one SRA are exclusive to the SRA, except for the inherited allowed NSSAI of the RA for the overlapping SRA.

The AMF provides the SRA information comprising the area description (SRA TA list, the SRA available (allowed) S-NSSAI and optionally SRA rejected S-NSSAI) in a separate Information Element (IE) referred to herein for example as SRA Information IE.

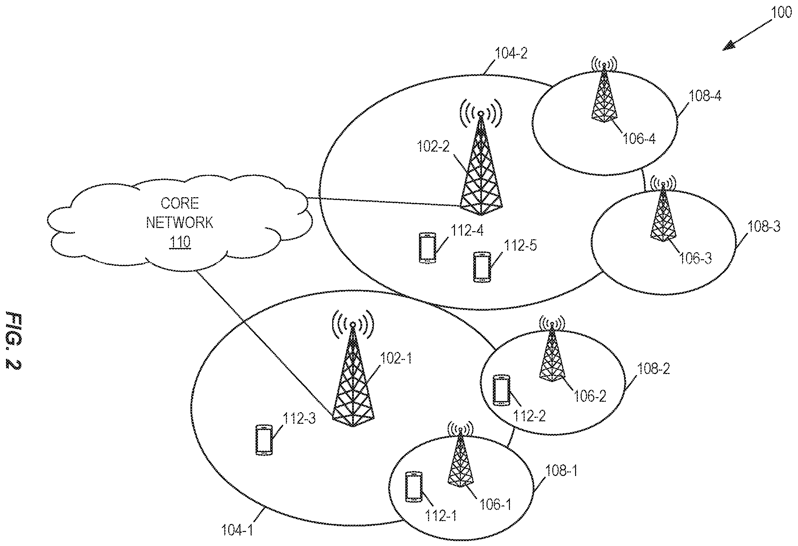

Figure 2 illustrates one example of a cellular communications system 100 in which embodiments of the present disclosure may be implemented. In the embodiments described herein, the cellular communications system 100 is a 5G system (5GS) including a Next Generation RAN (NG-RAN) and a 5G Core (5GC); however, the present disclosure is not limited thereto. In this example, the RAN includes base stations 102-1 and 102-2, which in the 5GS include NR base stations (gNBs) and optionally next generation eNBs (ng-eNBs) (e.g., LTE RAN nodes connected to the 5GC), controlling corresponding (macro) cells 104-1 and 104-2. The base stations 102-1 and 102-2 are generally referred to herein collectively as base stations 102 and individually as base station 102. Likewise, the (macro) cells 104-1 and 104-2 are generally referred to herein collectively as (macro) cells 104 and individually as (macro) cell 104. The RAN may also include a number of low power nodes 106-1 through 106-4 controlling corresponding small cells 108-1 through 108-4. The low power nodes 106-1 through 106-4 can be small base stations (such as pico or femto base stations) or RRHs, or the like. Notably, while not illustrated, one or more of the small cells 108-1 through 108-4 may alternatively be provided by the base stations 102. The low power nodes 106-1 through 106-4 are generally referred to herein collectively as low power nodes 106 and individually as low power node 106. Likewise, the small cells 108-1 through 108-4 are generally referred to herein collectively as small cells 108 and individually as small cell 108. The cellular communications system 100 also includes a core network 110, which in the 5G System (5GS) is referred to as the 5GC. The base stations 102 (and optionally the low power nodes 106) are connected to the core network 110.

The base stations 102 and the low power nodes 106 provide service to wireless communication devices 112-1 through 112-5 in the corresponding cells 104 and 108. The wireless communication devices 112-1 through 112-5 are generally referred to herein collectively as wireless communication devices 112 and individually as wireless communication device 112. In the following description, the wireless communication devices 112 are oftentimes UEs and as such sometimes referred to herein as UEs 112, but the present disclosure is not limited thereto.

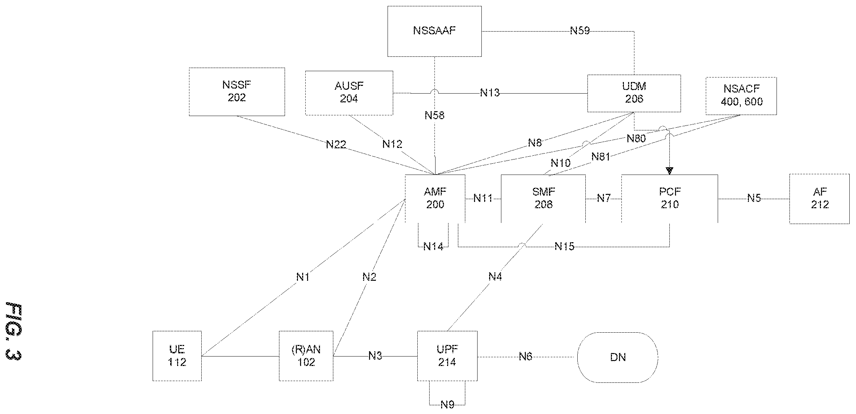

Figure 3 illustrates a wireless communication system represented as a 5G network architecture composed of core Network Functions (NFs), where interaction between any two NFs is represented by a point-to-point reference point/interface. Figure 3 can be viewed as one particular implementation of the system 100 of Figure 2.

Seen from the access side the 5G network architecture shown in Figure 3 comprises a plurality of UEs 112 connected to either a RAN 102 or an Access Network (AN) as well as an AMF 200. Typically, the R(AN) 102 comprises base stations, e.g., such as eNBs or gNBs or similar. Seen from the core network side, the 5GC NFs shown in Figure 3 include a NSSF 202, an AUSF 204, a UDM 206, the AMF 200, a SMF 208, a PCF 210, an NSACF (400) and an Application Function (AF) 212.

Reference point representations of the 5G network architecture are used to develop detailed call flows in the normative standardization. The N1 reference point is defined to carry signaling between the UE 112 and AMF 200. The reference points for connecting between the AN 102 and AMF 200 and between the AN 102 and UPF 214 are defined as N2 and N3, respectively. There is a reference point, N11, between the AMF 200 and SMF 208, which implies that the SMF 208 is at least partly controlled by the AMF 200. N4 is used by the SMF 208 and UPF 214 so that the UPF 214 can be set using the control signal generated by the SMF 208, and the UPF 214 can report its state to the SMF 208. N9 is the reference point for the connection between different UPFs 214, and N14 is the reference point connecting between different AMFs 200, respectively. N15 and N7 are defined since the PCF 210 applies policy to the AMF 200 and SMF 208, respectively. N12 is required for the AMF 200 to perform authentication of the UE 112. N8 and N10 are defined because the subscription data of the UE 112 is required for the AMF 200 and SMF 208.

The 5GC network aims at separating UP and CP. The UP carries user traffic while the CP carries signaling in the network. In Figure 3, the UPF 214 is in the UP and all other NFs, i.e., the AMF 200, SMF 208, PCF 210, AF 212, NSSF 202, AUSF 204, and UDM 206, are in the CP. Separating the UP and CP guarantees each plane resource to be scaled independently. It also allows UPFs to be deployed separately from CP functions in a distributed fashion. In this architecture, UPFs may be deployed very close to UEs to shorten the Round Trip Time (RTT) between UEs and data network for some applications requiring low latency.

The core 5G network architecture is composed of modularized functions. For example, the AMF 200 and SMF 208 are independent functions in the CP. Separated AMF 200 and SMF 208 allow independent evolution and scaling. Other CP functions like the PCF 210 and AUSF 204 can be separated as shown in Figure 3. Modularized function design enables the 5GC network to support various services flexibly.

Each NF interacts with another NF directly. However, indirect communication is also supported where it is possible to use intermediate functions to route messages from one NF to another NF. In the CP, a set of interactions between two NFs is defined as service so that its reuse is possible. This service enables support for modularity. The UP supports interactions such as forwarding operations between different UPFs.

The AMF 200 (Figure 3)) interacts with the Access Network via the N2 reference point and N1 reference point supporting NAS protocol with the wireless device/UE.

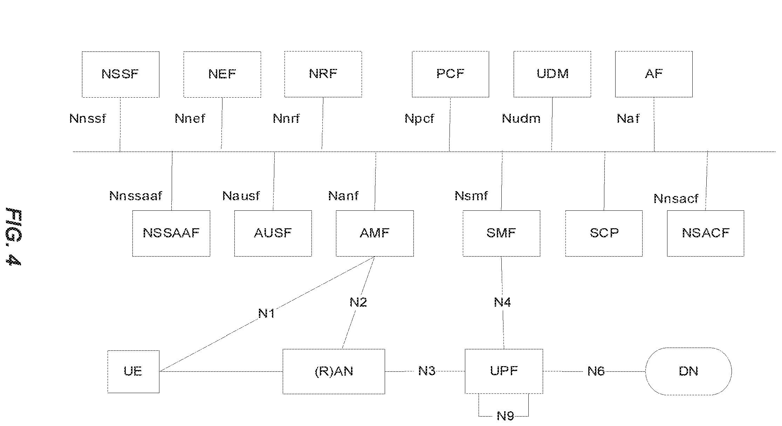

Figure 4 illustrates a 5G network architecture using service-based interfaces between the NFs in the CP, instead of the point-to-point reference points/interfaces used in the 5G network architecture of Figure 3. However, the NFs described above with reference to Figure 3 correspond to the NFs shown in Figure 4. The service(s) etc. that a NF provides to other authorized NFs can be exposed to the authorized NFs through the service-based interface. In Figure 4 the service-based interfaces are indicated by the letter "N" followed by the name of the NF, e.g. Namf for the service based interface of the AMF 200 and Nsmf for the service based interface of the SMF 208, etc. The NEF 300 and the NRF 302 in Figure 4 are not shown in Figure 3 discussed above. However, it should be clarified that all NFs depicted in Figure 3 can interact with the NEF 300 and the NRF 302 of Figure 4 as necessary, though not explicitly indicated in Figure 3.

Some properties of the NFs shown in Figures 3 and 4 may be described in the following manner. The AMF 200 provides UE-based authentication, authorization, mobility management, etc. A UE 112 even using multiple access technologies is basically connected to a single AMF 200 because the AMF 200 is independent of the access technologies. The SMF 208 is responsible for session management and allocates Internet Protocol (IP) addresses to UEs. It also selects and controls the UPF 214 for data transfer. If a UE 112 has multiple sessions, different SMFs 208 may be allocated to each session to manage them individually and possibly provide different functionalities per session. The AF 212 provides information on the packet flow to the PCF 210 responsible for policy control in order to support QoS. Based on the information, the PCF 210 determines policies about mobility and session management to make the AMF 200 and SMF 208 operate properly. The AUSF 204 supports authentication function for UEs or similar and thus stores data for authentication of UEs or similar while the UDM 206 stores subscription data of the UE 112. The Data Network (DN), not part of the 5GC network, provides Internet access or operator services and similar.

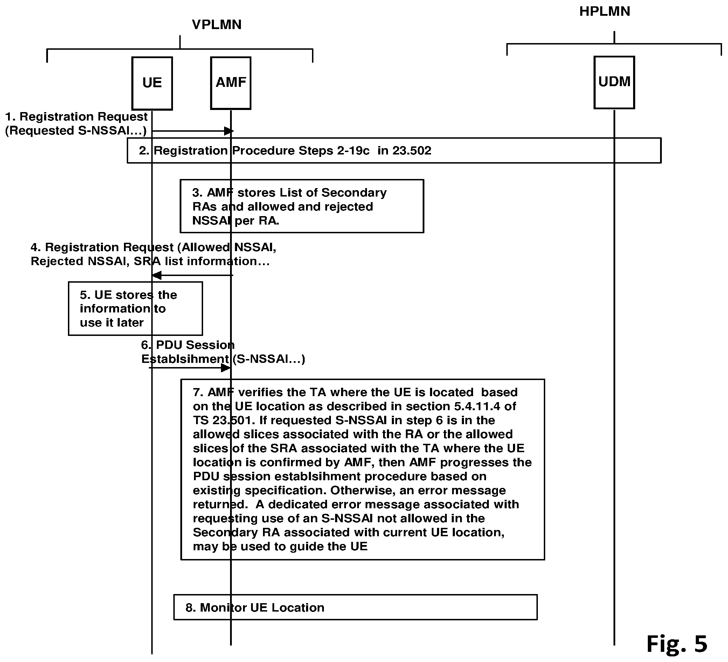

Certain aspects of the present disclosure and their embodiments may provide solutions to the aforementioned or other challenges. Figure 5 describe example implementation of the solution illustrating a registration request procedure followed by a PDU session establishment procedure in accordance with some embodiments.
**Step 1:** the UE registers in the 5G network and transmits to the core network node, hosting/supporting the AMF, a Registration Request message over NAS. The UE may include information indicating the capability of the UE to support Secondary RAs, i.e., receiving secondary list of tracking areas that support network slices not supported uniformly across the registration area. If the UE does not support SRA, the UE may omit including the capability, or it may include the capability information indicating the UE does not support SRAs. The AMF may determine that SRA, i.e., secondary list of tracking areas that support network slices not supported uniformly across the registration area, can be provided to the UE based on either the capability provided by the UE, UE subscription information indicating SRA can be provided to the UE, and/or network policies.
**Step 2:** Registration procedure follows steps 2-19c of clause 4.2.2 of 3GPP TS 23.502, however the embodiment herein requires the AMF to determine whether SRA information comprising secondary list of tracking areas that support network slices not supported uniformly across the registration area, should be provided to the UE based on one or more of the UE capability to support SRA, UE subscription or network policies. If the AMF supports SRA, it may also indicate to the UE, whether the feature is enabled or not.
**Step 3:** The AMF in addition to sending the RA information which may comprise the tracking area list (TAI list) and the allowed one or more network slices (S-NSSAIs) that are uniformly allowed across the RA (TAI list), determines that other S-NSSAIs can be made available/allowed for the UE over one or more secondary RA (SRA), where the SRA consists of one or more TA from either the TAI list (subset of RA) and or TAs outside the RA (i.e., not in the TAI list) (disjoint SRA). The AMF creates a list of SRAs comprising one or more SRA and each SRA is described by an SRA information conveyed to the UE.
   each SRA information comprises:
   - List of TAs (comprising one or more TA).
   - Allowed S-NSSAI and/or Configured S-NSSAIs of the SRA (not uniformly available in the RA)
   - Rejected NSSAI in the SRA (optional).
   - SRA id or index (optional)
   The AMF stores the RA and the one or more SRA and the corresponding TAs including the TA where the UE is currently located and the associated SRA, if the UE registered in a TA of an SRA.
**Step 4:** which corresponds to step 21 in the Registration procedure in TS 23.502 and corresponds to the AMF sending the Registration Accept message including the list of SRAs and associated information as per step 3 above.
**Step 5:** the UE stores the information so it can be used when needed.
**Step 6:** the UE is in a TA of an SRA and wants to establish a PDU session, the UE sends a PDU Session establishment request based on existing procedures in clause 4.3.2 in TS 23.502 and indicates the network slice (S-NSSAI). The UE does not establish a PDU Session using an SRA network slice (S-NSSAI) unless the S-NSSAI is registered in the SRA. This UE behavior can be controlled by a feature capability indicator obtained by the network that can enable or disable the feature and/or if the UE indicated support of the SRA capability.
**Step 7:** the AMF verifies the TA where the UE is currently located based on the UE location as described in section 5.4.11.4 of TS 23.501. If the S-NSSAI used by the UE in step 6 is in the allowed slices associated with the RA or the allowed slices of the SRA associated with the TA where the UE location is confirmed by the AMF, then the AMF progresses the PDU session establishment procedure based on existing specification. Otherwise, an error message is returned to the UE. A dedicated error message associated with requesting use of an S-NSSAI not allowed in the SRA associated with current UE location may be used to guide the UE.

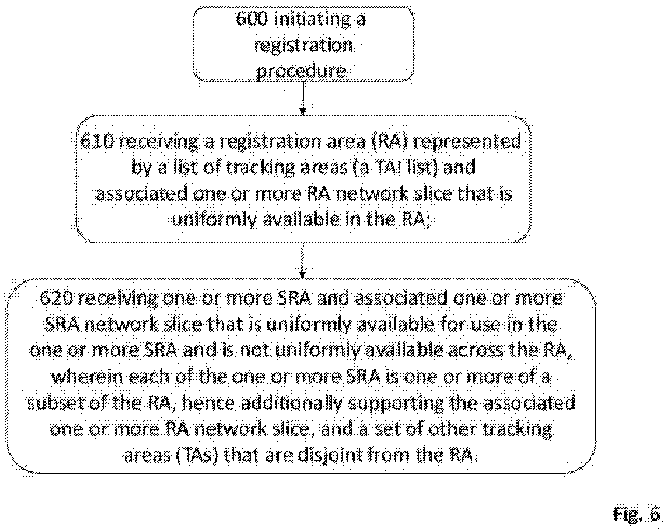

Figure 6 illustrates a method in the wireless device/UE for handling network slices in accordance with some embodiments as described herein.
The method comprises the step 600 by the wireless device/UE initiating a registration procedure with a network node (e.g., 5G AMF) in the serving network (5G system), where the serving network is either a Public Land Mobile Network PLMN or a Standalone Non-Public Network (SNPN). As an example, the UE initiates the registration procedure by sending a Registration Request message to the AMF. The method further comprises step 610 of receiving from the network node (AMF in 5G) a Registration Accept message including a Tracking Area list (known as TAI list) describing the registration area (RA) within which the wireless device/UE can move without having to send a Registration Request to the AMF, the associated one or more RA network slice that is uniformly available in the RA for the UE to use (i.e., currently known Allowed S-NSSAIs uniformly allowed in the RA). The wireless device/UE may also receive configured NSSAI supported in the RA or the serving network. Note that RA network slice is a term used in this disclosure to describe network slices uniformly available across all the tracking areas of the RA.
In addition, the method comprises step 620 where the wireless device/UE receives secondary registration area (SRA) List information including one or more SRA information. Each SRA information specifies one or more tracking area (TA) defining the coverage of the SRA where each SRA is either:
a subset of the RA (partially overlapping SRA), i.e., the SRA is represented by one or more TA that are also included in the the TAI list of the RA (see Figure 1), or
a set of other tracking areas (TAs) that are disjoint from the RA (disjoint SRA), i.e., tracking areas that are not included in the TAI list of the RA (See Figure 1).

Each SRA information includes the associated one or more SRA network slice (SRA S-NSSAI) that is uniformly available and allowed for use by the wireless device/UE in the one or more SRA. More specifically, the SRA network slice (S-NSSAI) is a network slice (S-NSSAI) that is not uniformly available across the whole RA and include for example:
a. S-NSSAIs indicated as Rejected S-NSSAIs when requested by the wireless device/UE in the Registration Request message. The Rejected S-NSSAIs comprise network slices that are rejected as not uniformly available in the RA but are available in some regions (subset) of the RA (SRA) or one or more TA (Regions) outside the RA (disjoint SRA), and/or
b. S-NSSAIs for other network slices that are not requested by the wireless device/UE but are available in one or more TA inside or outside the RA served by the AMF.

If the SRA is a subset of the RA, the SRA also supports the allowed S-NSSAIs of the RA by inheritance (e.g., SRA1 and SRA2 in Figure 1 or 1B). However, it is not required to explicitly indicate in the SRA information the allowed S-NSSAIs of the RA as they are already provided in the well-known Allowed NSSAI IE in the Registration Accept message as defined in TS 24.501. Alternatively, the proposed SRA list information IE could include them as well.

The associated one or more SRA network slice corresponds to one or more allowed network slice available uniformly across the tracking areas making up the SRA and optionally one or more configured network slice available uniformly across either the tracking areas making up the SRA or across the serving network.

In one aspect, when the wireless device/UE moves outside the RA into another TA (outside the RA) that may or may not be in the coverage area of a disjoint SRA, the wireless device/UE sends a Registration Request message which may further include one or more requested network slice (Requested S-NSSAI). If included, the one or more Requested S-NSSAI may further comprise at least one of:
a. previously rejected S-NSSAI for the RA (which may be available in an SRA and/or,
b. NSSAI previously indicated as supported in one or more SRAs, i.e., other S-NSSAIs available only within an SRA
and in response to the Registration Request, the wireless device/UE receives a Registration Accept message including SRA list information including at least one of the one or more SRA and the associated supported one or more allowed SRA network slice wherein the associated one or more SRA network slice indicates at least one of the one or more requested network slice that is only available and allowed in the SRA. One or more SRA implies including in the Registration Accept one or more tracking area lists where each list indicates the tracking areas that support uniformly one or more S-NSSAI.

In another aspect, when the wireless device/UE receives the Registration Accept message containing a RA (tracking areas list) with associated S-NSSAI(s) uniformly available across the RA, one or more allowed/available S-NSSAIs in at least one SRA (one or more tracking area), it may also receive the well-known Rejected NSSAI Information Element as defined in TS 24.501 and comprising one or more rejected S-NSSAIs as not uniformly available across the RA. Those one or more rejected S-NSSAIs may be comprised in the one or more allowed/available S-NSSAIs in at least one SRA.
The wireless device/UE stores the one or more S-NSSAIs uniformly available across the RA and the one or more S-NSSAIs available across at least an SRA. Those S-NSSAIs are also registered by the network node (AMF).

An example format of the SRA List Information Element and inclusion in the Registration accept message is described below. Note that another encoding format is possible:
Registration Accept
Message definition
The REGISTRATION ACCEPT message is sent by the AMF to the UE (based on the Registration Accept defined in TS 24.501)
Message type: REGISTRATION ACCEPT
Significance: dual
Direction: network to UE

### REGISTRATION ACCEPT message content

| **IEI** | **Inform ation Elemen t** | **Type/ Referen ce** | **Presen ce** | **Form at** | **Leng th** |
|---|---|---|---|---|---|
| | Extende d protocol discrimi nator | Extended protocol discriminator 9.2 of TS 24.501 | M | V | 1 |
| | Security header type | Security header type 9.3 of TS 24.501 | M | V | 1/2 |
| [...] | | | | | |
| 54 | TAI list | 5GS tracking area identity list 9.11.3.9 of TS 24.501 | O | TLV | 9-114 |
| 15 | Allowed NSSAI | NSSAI 9.11.3.37 of TS 24.501 | O | TLV | 4-74 |
| 11 | Rejected NSSAI | Rejected NSSAI 9.11.3.46 of TS 24.501 | O | TLV | 4-42 |
| 31 | Configur ed NSSAI | NSSAI 9.11.3.37 of TS 24.501 | O | TLV | 4-146 |
| **Xx** | **Second ary Registr ation Area List Inform ation** | **SRA List Information (section below)** | **O** | **TLV** | |
| [...] | | | | | |

### SRA list Information:

The purpose of the SRA information is to identify the tracking area identity from the TA list included in the secondary RA and the associated allowed S-NSSAI that are only available in the SRA (i.e., not included in the allowed NSSAI IE (9.11.3.46 of TS 24.501)) and may include other configured S-NSSAIs that are only available in the SRA (i.e., not included in the configured NSSAI IE (9.11.3.37 of TS 24.501)).

Note that the allowed NSSAI IE (9.11.3.46 of TS 24.501)), configured NSSAI IE (9.11.3.37 of TS 24.501)) and Rejected NSSAI 9.11.3.46 of TS 24.501 represent the uniformly allowed, configured and rejected NSSAI across the whole RA represented by the TAI list (9.11.3.9 of TS 24.501).

The SRA list information includes one or more SRA element. Each SRA element (SRA1, SRA2, ...) represents a smaller area within the RA made up of one or more TA of the TAI list. Each SRA element includes other allowed NSSAI not included in the allowed NSSAI IE (9.11.3.46 of TS 24.501) and may include other configured NSSAI not included in the configured NSSAI IE (9.11.3.37 of TS 24.501)).

In addition, each SRA element may include rejected NSSAI within the SRA (which may be provided if the UE registers within the SRA). All the NSSAI information included in the SRA information element are not included in the Allowed NSSAI IE, Configured NSSAI IE and Rejected NSSAI IE that are at the Registration Accept message level and that are applicable across the RA.

The S-NSSAI in the Allowed NSSAI IE (9.11.3.46 of TS 24.501)) is allowed in any TA in the TAI list IE (9.11.3.9 of TS 24.501), i.e. the whole RA and in the SRA if the TA list in the SRA information element includes the same TAs as in the TAI list (9.11.3.9) (SRA subset of RA or overlapping SRA).

| | | | | | | | |
|---|---|---|---|---|---|---|---|
| 8 | 7 | 6 | 5 | 4 | 3 | 2 | 1 |
| SRA IEI | | | | | | | |
| Length of SRA contents | | | | | | | |
| SRA 1 | | | | | | | |
| SRA 2 | | | | | | | |
| ... | | | | | | | |
| SRA p | | | | | | | |

### SRA list information element

| | | | | | | | |
|---|---|---|---|---|---|---|---|
| 8 | 7 | 6 | 5 | 4 | 3 | 2 | 1 |
| SRA 1 | | | | | | | |
| Length of SRA contents | | | | | | | |
| TA List | | | | | | | |
| Other Allowed NSSAI | | | | | | | |
| Other configured NSSAI | | | | | | | |
| Rejected NSSAI in SRA | | | | | | | |

### SRA information element (in one SRA element)

The method in Figure 6 further comprises an optional step (not shown) of indicating by the wireless device/UE to the network node (AMF) in the Registration Request message a capability information indicating the wireless device/UE supports receiving tracking areas and associated network slices that are not uniformly available across the RA, i.e., it can support SRA or network slice availability per SRA. In response to sending the capability of handling and receiving SRA information, the wireless device/UEreceives in the Registration Accept message from the network node (AMF) an indication that the SRA or the network slice availability per SRA is enabled or disabled (i.e., supported/not supported) in the network. The method further comprises the wireless device/UE receiving a notification from an access network node (e.g., gNB) that is connected to the network node (AMF) where the notification would indicate tracking area change (e.g., that a TA is included into an SRA (TAI list of the SRA)), in which case the SRA network slices will be available to be used in that TA as well.

In one aspect, the method in the wireless device/UE further comprises upon the wireless device/UE moving to a tracking area (TA) outside the RA, the wireless device/UE may send a second Registration Request including requested one or more network slice comprising the associated one or more SRA network slice and receiving a Registration Accept message comprising the allowed one or more SRA network slice as registered network slices.
In another aspect, the method describes the wireless device/UE establishing a PDU session in an associated SRA network slice (SRA S-NSSAI) while the UE is located in a TA of an SRA. Once the PDU session is established, the wireless device/UE moves outside the coverage area of the SRA where the associated SRA network slice is no longer supported. The method then includes the step of one of deactivating or suspending user plane associated to the PDU session or releasing the PDU session. However, the wireless device/UE may start resuming or reactivating the user plane upon moving to an SRA, within or disjoint from the RA, supporting the PDU session SRA network slice.

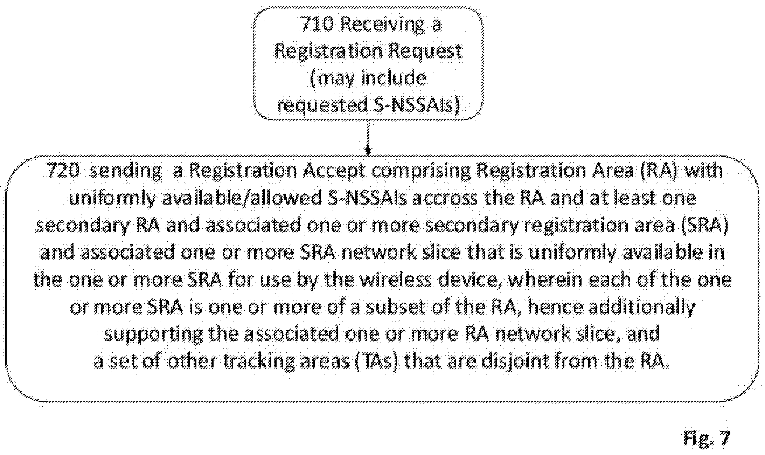

Figure 7 illustrates a method in the network node (e.g., AMF in 5G) for handling network slices in accordance with some embodiments as described herein. The method comprises step 710 the network node (e.g., AMF in 5G) participating in a registration procedure of a wireless device/UE in the serving network (5G system), where the serving network is either a Public Land Mobile Network PLMN or a Standalone Non-Public Network (SNPN). The network node (e.g., AMF in 5G) starts registering the wireless device/UE when receiving a Registration Request message from the wireless device/UE. The method further comprises, following the processing of the Registration Request, sending, at step 720, by the network node (AMF in 5G) to the wireless device/UE a Registration Accept message including a Tracking Area list (known as TAI list) describing the registration area (RA) within which the UE can move without having to send a Registration Request to the AMF, the associated one or more RA network slice that is uniformly available in the RA for the UE to use (i.e., currently known Allowed S-NSSAIs uniformly allowed in the RA). The AMF may also indicate configured NSSAI supported in the RA or the serving network.
In addition, the network node (e.g., AMF in 5G) further sends to the wireless device/UE in the Registration Accept message secondary registration area (SRA) List information including one or more SRA information. Each SRA information specifies one or more tracking area (TA) defining the coverage of the SRA where each SRA is either:
- a subset of the RA (partially overlapping SRA), i.e., one or more TA of the TAI list (see Figure 1), or
- a set of other tracking areas (TAs) that are disjoint from the RA (disjoint SRA) (See Figure 1).

In addition, each SRA information includes the associated one or more SRA network slice (SRA S-NSSAI) that is uniformly available and allowed for use by the wireless device/UE in the one or more SRA. More specifically, the SRA network slice (S-NSSAI) is a network slice (S-NSSAI) that is not uniformly available across the whole RA and include for example:
a. S-NSSAIs indicated as Rejected S-NSSAIs when requested by the wireless device/UE in the Registration Request message. The Rejected S-NSSAIs comprise network slices that are rejected as not uniformly available in the RA but are available in some regions (subset) of the RA (SRA) or one or more TA (Regions) outside the RA (disjoint SRA), and/or
b. S-NSSAIs for other network slices that are not requested by the wireless device/UE but are available in one or more TA inside or outside the RA served by the AMF.

If the SRA is a subset of the RA, the SRA also supports the allowed S-NSSAIs of the RA by inheritance (e.g., SRA1 and SRA2 in Figure 1). However, the SRA information do not need to explicitly indicate them as they are already provided in the well-known Allowed NSSAI IE. Alternatively, the proposed IE could include them as well.

The associated one or more SRA network slice corresponds to one or more allowed network slice available uniformly across the SRA and optionally one or more configured network slice available uniformly across the SRA or serving network.

In one aspect, receiving a Registration Request message from the wireless device/UE includes one or more requested network slice (Requested S-NSSAI) (which may include i) previously rejected S-NSSAI for the RA, but available in an SRA and/or ii) other SRA NSSAI, i.e., other S-NSSAI available only in an SRA) and in response, sending a Registration Accept message including SRA list information including at least one of the one or more SRA and the associated one or more allowed SRA network slice wherein the associated one or more SRA network slice indicates at least one of the one or more requested network slice that is only available and allowed in the SRA.
Although, the available and allowed SRA S-NSSAI in the SRA may include S-NSSAI that is considered rejected in the RA, the Registration Accept message may in addition include the well-known Rejected NSSAI Information Element as defined in TS 24.501 and comprising the one or more rejected S-NSSAI as not uniformly available across the RA. The network node (AMF in 5G) stores the associated one or more RA network slice and the associated one or more SRA network slice as part of the UE context.

The method further comprises receiving by the network node (AMF in 5G) in the Registration Request message a capability of the wireless device indicating the wireless device/UE supports SRA or network slice availability per SRA and indicating in the Registration Accept message from the network node (AMF) an indication that the SRA or the network slice availability per SRA is enabled or disabled in the network taking into account the UE capability, or the UE subscription (that indicates SRA can be provided to the UE) or operator policy.
In another aspect, the method comprises the step of sending to an access network node (e.g., gNB) serving the wireless device/UE information such as an RRC inactive assistance information indicating the S-NSSAIs available or allowed in each tracking area of the list of tracking areas, where the S-NSSAIs include the associated one or more RA network slice available uniformly across all the TAs of the RA and the one or more SRA network slice available across the TAs of the one or more SRA.
The method further comprises receiving by the network node (AMF in 5G) a subsequent Registration Request including Requested NSSAI as the associated one or more SRA network slice (SRA S-NSSAI) when the wireless device moves to a TA in an SRA outside the RA and sending a Registration Accept message comprising the allowed one or more SRA network slice as registered network slices in the SRA. This is not necessary if the AMF provided the SRA as disjoint from the RA as part of the previous registration procedure and both the AMF and UE implicitly registers all the corresponding S-NSSAIs in the RA and disjoint SRAs and any SRA subset of the RA if any are included.
In accordance with another aspect, the method includes determining the UE has established a PDU session with an SMF over a network slice (a network slice of an RA or of an SRA), and upon detecting the wireless device has moved into a tracking area of an SRA not supporting the used network slice (S-NSSAI), the AMF initiates deactivation or suspension of any user plane associated with the PDU session using the used network slice (S-NSSAI). The AMF may do so by informing the corresponding Session Management Function, which controls the PDU session. The deactivation or suspension of the user plane may be performed by the SMF.

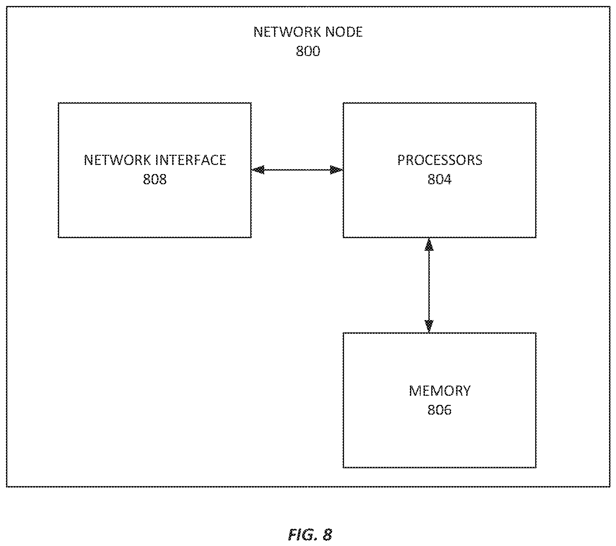

Figure 8 is a schematic block diagram of a network node 800 according to some embodiments of the present disclosure. Optional features are represented by dashed boxes. The network node 800 may be, for example, a core network node that implements a NF (e.g., AMF 200, SMF 206, NSACF 400, NSACF 500, NSACF 600, NSACF 700, UDM/HSS 402, UDM/HSS 502, UDM/HSS 604, or UDR 702, or the like). As illustrated, the network node 800 includes a one or more processors 804 (e.g., Central Processing Units (CPUs), Application Specific Integrated Circuits (ASICs), Field Programmable Gate Arrays (FPGAs), and/or the like), memory 806, and a network interface 808. The one or more processors 804 are also referred to herein as processing circuitry. The one or more processors 804 operate to provide one or more functions of the network node 800 as described herein (e.g., one or more functions of the AMF 200, SMF 206, NSACF 400, NSACF 600, UDM/HSS 402, UDM/HSS 502, UDM/HSS 604, or UDR 702, or the like, as described herein). In some embodiments, the function(s) are implemented in software that is stored, e.g., in the memory 806 and executed by the one or more processors 804.

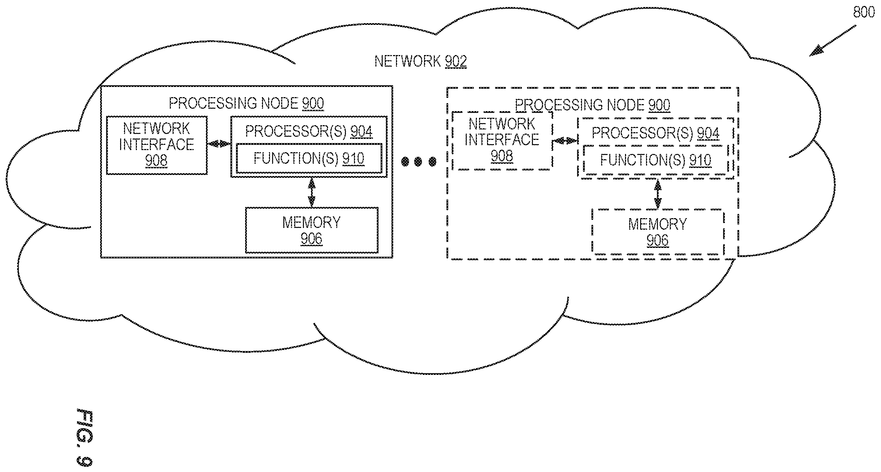

Figure 9 is a schematic block diagram that illustrates a virtualized embodiment of the network node 800 according to some embodiments of the present disclosure. Again, optional features are represented by dashed boxes. As used herein, a "virtualized" network node is an implementation of the network node 800 in which at least a portion of the functionality of the network node 800 is implemented as a virtual component(s) (e.g., via a virtual machine(s) executing on a physical processing node(s) in a network(s)). As illustrated, in this example, the network node 800 includes one or more processing nodes 900 coupled to or included as part of a network(s) 902. Each processing node 900 includes one or more processors 904 (e.g., CPUs, ASICs, FPGAs, and/or the like), memory 906, and a network interface 908. In this example, functions 910 of the network node 800 described herein (e.g., one or more functions of the AMF 200, SMF 206, NSACF 400, NSACF 500, NSACF 600, NSACF 700, UDM/HSS 402, UDM/HSS 502, UDM/HSS 604, or UDR 702, or the like, as described herein)are implemented at the one or more processing nodes 900 or distributed across the two or more processing nodes 900 in any desired manner. In some particular embodiments, some or all of the functions 910 of the network node 800 described herein are implemented as virtual components executed by one or more virtual machines implemented in a virtual environment(s) hosted by the processing node(s) 900.

In some embodiments, a computer program including instructions which, when executed by at least one processor, causes the at least one processor to carry out the functionality of the network node 800 or a node (e.g., a processing node 900) implementing one or more of the functions 910 of the network node 800 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

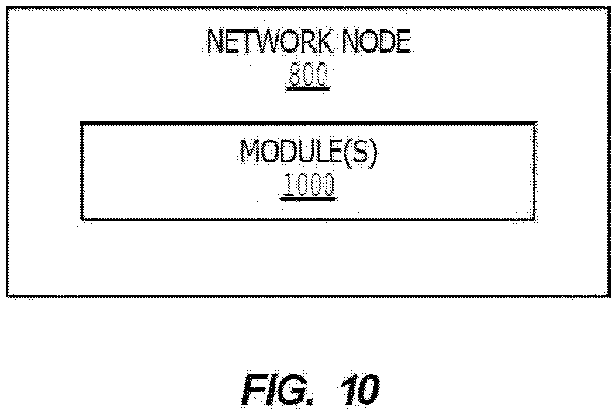

Figure 10 is a schematic block diagram of the network node 800 according to some other embodiments of the present disclosure. The network node 800 includes one or more modules 1000, each of which is implemented in software. The module(s) 1000 provide the functionality of the network node 800 described herein. This discussion is equally applicable to the processing node 900 of Figure 9 where the modules 1000 may be implemented at one of the processing nodes 900 or distributed across multiple processing nodes 900.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processors (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

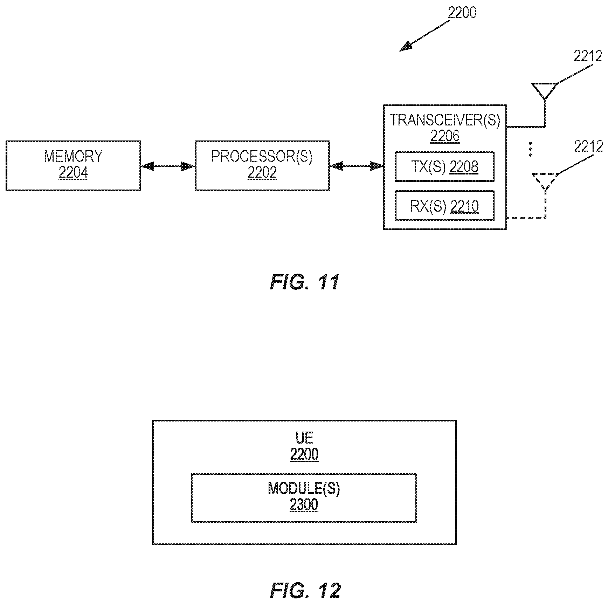

Figure 11 is a schematic block diagram of a wireless communication device 2200 according to some embodiments of the present disclosure. As illustrated, the wireless communication device 2200 includes one or more processors 2202 (e.g., CPUs, ASICs, FPGAs, and/or the like), memory 2204, and one or more transceivers 2206 each including one or more transmitters 2208 and one or more receivers 2210 coupled to one or more antennas 2212. The transceiver(s) 2206 includes radio-front end circuitry connected to the antenna(s) 2212 that is configured to condition signals communicated between the antenna(s) 2212 and the processor(s) 2202, as will be appreciated by on of ordinary skill in the art. The processors 2202 are also referred to herein as processing circuitry. The transceivers 2206 are also referred to herein as radio circuitry. In some embodiments, the functionality of the wireless communication device 2200 described above may be fully or partially implemented in software that is, e.g., stored in the memory 2204 and executed by the processor(s) 2202. Note that the wireless communication device 2200 may include additional components not illustrated in Figure 22 such as, e.g., one or more user interface components (e.g., an input/output interface including a display, buttons, a touch screen, a microphone, a speaker(s), and/or the like and/or any other components for allowing input of information into the wireless communication device 2200 and/or allowing output of information from the wireless communication device 2200), a power supply (e.g., a battery and associated power circuitry), etc.

In some embodiments, a computer program including instructions which, when executed by at least one processor, causes the at least one processor to carry out the functionality of the wireless communication device 2200 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 12 is a schematic block diagram of the wireless communication device 2200 according to some other embodiments of the present disclosure. The wireless communication device 2200 includes one or more modules 2300, each of which is implemented in software. The module(s) 2300 provide the functionality of the wireless communication device 2200 described herein.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

## Claims

1. A method performed by a wireless device for handling network slices in a telecommunication network, the method comprising:
- sending (610) a registration request to a network node in the telecommunication network;
- receiving (620), from the network node, a registration accept comprising
- a first list of one or more tracking areas identifiers, TAI, list of one or more tracking areas representing a registration area, RA, and associated one or more first network slices that are available across all the one or more tracking areas of the RA; and
- at least one second TAI list of second one or more tracking areas identifiers of one or more second tracking areas and associated one or more second network slices that are available across all the one or more second tracking areas of the at least one second TAI list,
- wherein the second one or more tracking areas are at least one of i) a subset of the one or more tracking areas included in the first TAI list representing the RA and ii) different tracking areas that are not included in the first TAI list; and
- wherein the one or more second network slices are not supported across all the RA represented by the one or more tracking areas of the first TAI list.

2. The method of claim 1 wherein the telecommunication network is one of a Public Land Mobile Network, PLMN, or a Stand-Alone Non-Public Network, SNPN.

3. The method of claim 1 or 2 wherein the associated one or more first network slices corresponds to at least one of:
- one or more allowed first network slices available across all tracking areas of the first TAI list representing the RA and
- one or more configured first network slices available across all tracking areas of the first TAI list representing the RA supported by the serving PLMN; and/or
wherein the one or more second network slices associated with the second tracking areas of the at least one second TAI list correspond to at least one of:
- one or more allowed second network slices available across all second tracking areas of the at least one second TAI list;
- one or more configured second network slices available across all second tracking areas of the at least one second TAI list.

4. The method of any one of claims 1 to 3 wherein the one or more second network slices associated with the at least one second TAI list correspond to at least one of the one or more requested network slices that are not supported in all tracking areas of the RA but are available across the tracking areas of the at least one second TAI list; and/or
wherein the associated one or more first network slices, the associated one or more second network slices or the requested one or more network slices are each indicated by a Single Network Slice Selection Assistance Information, S-NSSAI.

5. The method of any one of claims 1 to 4 wherein the method further comprises indicating to the network node a capability of the wireless device to support receiving the at least one second TAI list with the associated second network slices or support for network slice availability per secondary areas defined by a list of second TAI list;
wherein, optionally, the method further comprises receiving from the network node an indication that the capability of a second TAI list with the associated second network slices or the network slice availability per secondary areas defined by a list of second TAI list is enabled or disabled.

6. The method of any one of claims 1 to 5 wherein the method further comprises upon moving to a tracking area outside the RA, sending a second Registration Request including requested one or more network slices comprising the associated one or more second network slices; and receiving a Registration Accept message comprising the allowed one or more second network sliced as registered network slices.

7. The method of any one of claims 1 to 5 further comprising:
- establishing a PDU session in an associated second network slice while in a tracking area of the second TAI list;
- moving to another tracking area where the associated second network slice is no longer supported; and
- performing one of deactivating or suspending user plane associated to the PDU session or releasing the PDU session.

8. The method of claim 7, wherein the method further comprises re-establishing the PDU Session, or resuming or reactivating the user plane upon moving back to a tracking area of the second TAI list supporting the associated second network slice.

9. A method performed by a network node (800) for handling network slices in a serving telecommunication network, the method comprising:
- receiving (710) a Registration Request from a wireless device in the serving telecommunication network;
- sending (720), to the wireless device, a Registration Response including
- a first list of one or more tracking areas identifiers, TAI, list of one or more tracking areas representing a registration area, RA, and associated one or more first network slices that are available across all the one or more tracking areas of the RA and
- at least one second TAI list of second one or more tracking areas identifiers of one or more second tracking areas and associated one or more second network slices that are available across all the second one or more tracking areas of the at least one second TAI list;
- wherein the second one or more tracking areas are at least one of i) a subset of the one or more tracking areas representing the RA and ii) different tracking areas that are not included in the first TAI list; and
- wherein the one or more second network slices are not supported across all the RA represented by the one or more tracking areas of the first TAI list.

10. The method of claim 9 wherein the telecommunication network is one of a Public Land Mobile Network, PLMN, or a Stand-Alone Non-Public Network, SNPN.

11. The method of claim 9 or 10 wherein the associated one or more first network slices correspond to at least one of:
- one or more allowed first network slices available across all tracking areas of the first TAI list representing the RA and
- one or more configured first network slices available across all tracking areas of the first TAI list representing the RA supported by the serving PLMN; and/or
wherein the associated one or more second network slices correspond to at least one of:
- one or more allowed second network slices available across all second tracking areas of the at least one second TAI list;
- one or more configured second network slices available across all second tracking areas of the at least one second TAI list.

12. The method of any one of claims 9 to 11 wherein the method further comprises receiving from the wireless device information indicating a capability of the wireless device to support receiving the at least one second TAI list with the associated second network slices or support for network slice availability per secondary areas defined by a list of second TAI list;
wherein, optionally, the method further comprises sending to the wireless device an indication that the capability of a second TAI list with the associated second network slices or the network slice availability per secondary areas defined by a list of second TAI list is enabled or disabled.

13. The method of any one of claims 9 to 12 wherein the method further comprises registering the associated one or more first network slices and the associated one or more second network slices as registered for the wireless device; or
wherein the method further comprises receiving a second Registration Request comprising requested one or more network slices indicating the associated one or more second network slices when the wireless device moves to a TA disjoint from the RA; and sending a Registration Accept message comprising the allowed one or more second network slices as registered network slices.

14. The method of any of any one of claims 9 to 13 further comprising:
- determining the wireless device is using a network slice for a PDU session;
- upon detecting the wireless device is moved into another tracking area of second TAI list that is not supporting the used network slice;
- informing a Session Management Function controlling the PDU session to initiate deactivation or suspension of any user plane associated with the PDU session.

15. A wireless device comprising one or more processor and memory for storing instructions which when executed by the one or more processors, wherein the wireless device is configured to:
- send (610) a registration request to a network node in the telecommunication network;
- receive (620) a registration accept comprising:
a first list of one or more tracking areas identifiers, TAI, list of one or more tracking areas representing a registration area, RA, and associated one or more first network slices that are available across all the one or more tracking areas of the RA; and
at least one second TAI list of second one or more tracking areas identifiers of one or more second tracking areas and associated one or more second network slices that are available across all the one or more second tracking areas of the at least one second TAI list,
- wherein the second one or more tracking areas are at least one of i) a subset of the one or more tracking areas included in the first TAI list representing the RA and ii) different tracking areas that are not included in the first TAI list; and
- wherein the one or more second network slices are not supported across all the RA represented by the one or more tracking areas of the first TAI list.

## Patentansprüche

1. Verfahren, durchgeführt durch eine drahtlose Vorrichtung zum Handhaben von Netz-Slices in einem Telekommunikationsnetz, wobei das Verfahren Folgendes umfasst:
- Senden (610) einer Registrierungsanfrage an einen Netzknoten in dem Telekommunikationsnetz;
- Empfangen (620), von dem Netzknoten, einer Registrierungsannahme, umfassend
- eine erste Liste von einer oder mehreren Listen von Verfolgungsbereichskennungen, TAI, von einem oder mehreren Verfolgungsbereichen, die einen Registrierungsbereich, RA, darstellen, und einen oder mehreren assoziierten ersten Netz-Slices, die über alle von dem einen oder den mehreren Verfolgungsbereichen des RA verfügbar sind; und
- mindestens eine zweite TAI-Liste von einer oder mehreren zweiten Verfolgungsbereichskennungen von einem oder mehreren zweiten Verfolgungsbereichen und einen oder mehreren assoziierten zweiten Netz-Slices, die über alle von dem einen oder den mehreren zweiten Verfolgungsbereichen der mindestens einen zweiten TAI-Liste verfügbar sind,
- wobei der eine oder die mehreren zweiten Verfolgungsbereiche mindestens eines von i) einem Teilsatz von dem einen oder den mehreren Verfolgungsbereichen, die in der ersten TAI-Liste enthalten sind und den RA darstellen, und ii) verschiedenen Verfolgungsbereichen, die in der ersten TAI-Liste nicht enthalten sind, sind; und
- wobei das eine oder die mehreren zweiten Netz-Slices nicht über den gesamten RA, der durch den einen oder die mehreren Verfolgungsbereiche der ersten TAI-Liste dargestellt ist, unterstützt werden.

2. Verfahren nach Anspruch 1, wobei das Telekommunikationsnetz eines von einem öffentlichen terrestrischen Mobilfunknetz, PLMN, oder einem eigenständigen nicht öffentlichen Netz, SNPN, ist.

3. Verfahren nach Anspruch 1 oder 2, wobei das eine oder die mehreren assoziierten ersten Netz-Slices mindestens einem von Folgendem entsprechen:
- einem oder mehreren zugelassenen ersten Netz-Slices, die über alle Verfolgungsbereiche der ersten TAI-Liste, die den RA darstellen, verfügbar sind, und
- einem oder mehreren konfigurierten ersten Netz-Slices, die über alle Verfolgungsbereiche der ersten TAI-Liste, die den RA darstellen, der durch das bedienende PLMN unterstützt wird, verfügbar sind; und/oder
wobei das eine oder die mehreren zweiten Netz-Slices, die mit den zweiten Verfolgungsbereichen der mindestens einen zweiten TAI-Liste assoziiert sind, mindestens einem von Folgendem entsprechen:
- einem oder mehreren zugelassenen zweiten Netz-Slices, die über alle zweiten Verfolgungsbereiche der mindestens einen zweiten TAI-Liste verfügbar sind;
- einem oder mehreren konfigurierten zweiten Netz-Slices, die über alle zweiten Verfolgungsbereiche der mindestens einen zweiten TAI-Liste verfügbar sind.

4. Verfahren nach einem der Ansprüche 1 bis 3, wobei das eine oder die mehreren zweiten Netz-Slices, die mit der mindestens einen zweiten TAI-Liste assoziiert sind, mindestens einem von dem einen oder den mehreren angefragten Netz-Slices entsprechen, die nicht in allen Verfolgungsbereichen des RA unterstützt werden, aber über die Verfolgungsbereiche der mindestens einen zweiten TAI-Liste verfügbar sind; und/oder
wobei das eine oder die mehreren assoziierten ersten Netz-Slices, das eine oder die mehreren assoziierten zweiten Netz-Slices oder das eine oder die mehreren angefragten Netz-Slices jeweils durch eine Unterstützungsinformation zur Auswahl eines einzelnen Netz-Slice, S-NSSAI, angegeben sind.

5. Verfahren nach einem der Ansprüche 1 bis 4, wobei das Verfahren ferner Angeben einer Fähigkeit der drahtlosen Vorrichtung, Empfangen der mindestens einen zweiten TAI-Liste mit den assoziierten zweiten Netz-Slices zu unterstützen oder Netz-Slice-Verfügbarkeit pro sekundären Bereichen definiert durch eine Liste von zweiter TAI-Liste zu unterstützen, an den Netzknoten umfasst;
wobei optional das Verfahren ferner Empfangen, von dem Netzknoten, einer Angabe umfasst, dass die Fähigkeit einer zweiten TAI-Liste mit den assoziierten zweiten Netz-Slices oder die Netz-Slice-Verfügbarkeit pro sekundären Bereichen definiert durch eine Liste von zweiter TAI-Liste eingeschaltet oder ausgeschaltet ist.

6. Verfahren nach einem der Ansprüche 1 bis 5, wobei das Verfahren ferner beim Bewegen zu einem Verfolgungsbereich außerhalb des RA Senden einer zweiten Registrierungsanfrage beinhaltend ein oder mehrere angefragte Netz-Slices umfassend das eine oder die mehreren assoziierten zweiten Netz-Slices; und Empfangen einer Registrierungsannahmenachricht umfassend das eine oder die mehreren zugelassenen zweiten Netz-Slices als registrierte Netz-Slices umfasst.

7. Verfahren nach einem der Ansprüche 1 bis 5, ferner umfassend:
- Herstellen einer PDU-Sitzung in einem assoziierten zweiten Netz-Slice, bei Vorhandensein in einem Verfolgungsbereich der zweiten TAI-Liste;
- Bewegen zu einem anderen Verfolgungsbereich, wo das assoziierte zweite Netz-Slice nicht länger unterstützt wird; und
- Durchführen von einem von Deaktivieren oder Aussetzen einer Benutzerebene, die mit der PDU-Sitzung assoziiert ist, oder Freigeben der PDU-Sitzung.

8. Verfahren nach Anspruch 7, wobei das Verfahren ferner erneutes Herstellen der PDU-Sitzung oder Wiederaufnehmen oder Reaktivieren der Benutzerebene beim Zurückbewegen zu einem Verfolgungsbereich der zweiten TAI-Liste, die das assoziierte zweite Netz-Slice unterstützt, umfasst.

9. Verfahren, durchgeführt durch einen Netzknoten (800) zum Handhaben von Netz-Slices in einem bedienenden Telekommunikationsnetz, wobei das Verfahren Folgendes umfasst:
- Empfangen (710) einer Registrierungsanfrage von einer drahtlosen Vorrichtung in dem bedienenden Telekommunikationsnetz;
- Senden (720), an die drahtlose Vorrichtung, einer Registrierungsantwort, beinhaltend
- eine erste Liste von einer oder mehreren Listen von Verfolgungsbereichskennungen, TAI von einem oder mehreren Verfolgungsbereichen, die einen Registrierungsbereich, RA, darstellen, und einen oder mehreren assoziierten ersten Netz-Slices, die über alle von dem einen oder den mehreren Verfolgungsbereichen des RA verfügbar sind, und
- mindestens eine zweite TAI-Liste von einer oder mehreren zweiten Verfolgungsbereichskennungen von einem oder mehreren zweiten Verfolgungsbereichen und einem oder mehreren assoziierten zweiten Netz-Slices, die über alle von dem einen oder den mehreren zweiten Verfolgungsbereichen der mindestens einen zweiten TAI-Liste verfügbar sind;
- wobei der eine oder die mehreren zweiten Verfolgungsbereiche mindestens eines von i) einem Teilsatz von dem einen oder den mehreren Verfolgungsbereichen, die den RA darstellen, und ii) verschiedenen Verfolgungsbereichen, die in der ersten TAI-Liste nicht enthalten sind, sind; und
- wobei das eine oder die mehreren zweiten Netz-Slices nicht über den gesamten RA, der durch den einen oder die mehreren Verfolgungsbereiche der ersten TAI-Liste dargestellt ist, unterstützt werden.

10. Verfahren nach Anspruch 9, wobei das Telekommunikationsnetz eines von einem öffentlichen terrestrischen Mobilfunknetz, PLMN, oder einem eigenständigen nicht öffentlichen Netz, SNPN, ist.

11. Verfahren nach Anspruch 9 oder 10, wobei das eine oder die mehreren assoziierten ersten Netz-Slices mindestens einem von Folgendem entsprechen:
- einem oder mehreren zugelassenen ersten Netz-Slices, die über alle Verfolgungsbereiche der ersten TAI-Liste, die den RA darstellen, verfügbar sind, und
- einem oder mehreren konfigurierten ersten Netz-Slices, die über alle Verfolgungsbereiche der ersten TAI-Liste, die den RA darstellen, der durch das bedienende PLMN unterstützt wird, verfügbar sind; und/oder
wobei das eine oder die mehreren assoziierten zweiten Netz-Slices mindestens einem von Folgendem entsprechen:
- einem oder mehreren zugelassenen zweiten Netz-Slices, die über alle zweiten Verfolgungsbereiche der mindestens einen zweiten TAI-Liste verfügbar sind;
- einem oder mehreren konfigurierten zweiten Netz-Slices, die über alle zweiten Verfolgungsbereiche der mindestens einen zweiten TAI-Liste verfügbar sind.

12. Verfahren nach einem der Ansprüche 9 bis 11, wobei das Verfahren ferner Empfangen, von der drahtlosen Vorrichtung, von Informationen, die eine Fähigkeit der drahtlosen Vorrichtung angeben, Empfangen der mindestens einen zweiten TAI-Liste mit den assoziierten zweiten Netz-Slices zu unterstützen oder Netz-Slice-Verfügbarkeit pro sekundären Bereichen definiert durch eine Liste von zweiter TAI-Liste zu unterstützen, umfasst;
wobei optional das Verfahren ferner Senden, an die drahtlose Vorrichtung, einer Angabe umfasst, dass die Fähigkeit einer zweiten TAI-Liste mit den assoziierten zweiten Netz-Slices oder die Netz-Slice-Verfügbarkeit pro sekundären Bereichen definiert durch eine Liste von zweiter TAI-Liste eingeschaltet oder ausgeschaltet ist.

13. Verfahren nach einem der Ansprüche 9 bis 12, wobei das Verfahren ferner Registrieren des einen oder der mehreren assoziierten ersten Netz-Slices und des einen oder der mehreren assoziierten zweiten Netz-Slices als registriert für die drahtlose Vorrichtung umfasst; oder
wobei das Verfahren ferner Empfangen einer zweiten Registrierungsanfrage umfassend ein oder mehrere angefragte Netz-Slices, die das eine oder die mehreren assoziierten zweiten Netz-Slices angeben, wenn sich die drahtlose Vorrichtung zu einem TA getrennt von dem RA bewegt; und Senden einer Registrierungsannahmenachricht umfassend das eine oder die mehreren zugelassenen zweiten Netz-Slices als registrierte Netz-Slices umfasst.

14. Verfahren nach einem der Ansprüche 9 bis 13, ferner umfassend:
- Bestimmen, dass die drahtlose Vorrichtung ein Netz-Slice für eine PDU-Sitzung verwendet;
- beim Detektieren, dass die drahtlose Vorrichtung in einen anderen Verfolgungsbereich der zweiten TAI-Liste bewegt wird, der das verwendete Netz-Slice nicht unterstützt;
- Informieren einer Sitzungsverwaltungsfunktion, welche die PDU-Sitzung steuert, Deaktivierung oder Aussetzung einer beliebigen Benutzerebene, die mit der PDU-Sitzung assoziiert ist, zu initiieren.

15. Drahtlose Vorrichtung, umfassend einen oder mehrere Prozessoren und Speicher zum Speichern von Anweisungen, die, wenn durch den einen oder die mehreren Prozessoren ausgeführt, wobei die drahtlose Vorrichtung zu Folgendem konfiguriert ist:
- Senden (610) einer Registrierungsanfrage an einen Netzknoten in dem Telekommunikationsnetz;
- Empfangen (620) einer Registrierungsannahme, umfassend
eine erste Liste von einer oder mehreren Listen von Verfolgungsbereichskennungen, von einem oder mehreren Verfolgungsbereichen, die einen Registrierungsbereich, RA, darstellen, und einen oder mehreren assoziierten ersten Netz-Slices, die über alle von dem einen oder den mehreren Verfolgungsbereichen des RA verfügbar sind; und
mindestens eine zweite TAI-Liste von einer oder mehreren zweiten Verfolgungsbereichskennungen von einem oder mehreren zweiten Verfolgungsbereichen und einem oder mehreren assoziierten zweiten Netz-Slices, die über alle von dem einen oder den mehreren zweiten Verfolgungsbereichen der mindestens einen zweiten TAI-Liste verfügbar sind,
- wobei der eine oder die mehreren zweiten Verfolgungsbereiche mindestens eines von i) einem Teilsatz von dem einen oder den mehreren Verfolgungsbereichen, die in der ersten TAI-Liste enthalten sind und den RA darstellen, und ii) verschiedenen Verfolgungsbereichen, die in der ersten TAI-Liste nicht enthalten sind, sind; und
- wobei das eine oder die mehreren zweiten Netz-Slices nicht über den gesamten RA dargestellt durch den einen oder die mehreren Verfolgungsbereiche der ersten TAI-Liste unterstützt werden.

## Revendications

1. Procédé réalisé par un dispositif sans fil pour gérer des tranches de réseau dans un réseau de télécommunication, le procédé comprenant :
- l'envoi (610) d'une demande d'enregistrement à un nœud de réseau dans le réseau de télécommunication ;
- la réception (620), à partir du nœud de réseau, d'une acceptation d'enregistrement comprenant :
- une première liste d'un ou plusieurs identifiants de zones de suivi, TAI, d'une ou plusieurs zones de suivi représentant une zone d'enregistrement, RA, et les une ou plusieurs premières tranches de réseau associées qui sont disponibles sur l'ensemble des une ou plusieurs zones de suivi de la RA ; et
- au moins une seconde liste TAI d'un ou plusieurs seconds identifiants de zones de suivi d'une ou plusieurs secondes zones de suivi et les une ou plusieurs secondes tranches de réseau associées qui sont disponibles sur l'ensemble des une ou plusieurs secondes zones de suivi de l'au moins une seconde liste TAI,
- dans lequel les une ou plusieurs secondes zones de suivi sont au moins l'un parmi i) un sous-ensemble des une ou plusieurs zones de suivi incluses dans la première liste TAI représentant la RA et ii) différentes zones de suivi qui ne sont pas incluses dans la première liste TAI ; et
- dans lequel les une ou plusieurs secondes tranches de réseau ne sont pas prises en charge sur l'ensemble de la RA représentée par les une ou plusieurs zones de suivi de la première liste TAI.

2. Procédé selon la revendication 1, dans lequel le réseau de télécommunication est l'un d'un réseau mobile terrestre public, PLMN, ou d'un réseau non public autonome, SNPN.

3. Procédé selon la revendication 1 ou 2, dans lequel les une ou plusieurs premières tranches de réseau associées correspondent à au moins l'un parmi :
- une ou plusieurs premières tranches de réseau autorisées disponibles sur l'ensemble des zones de suivi de la première liste TAI représentant la RA et
- une ou plusieurs premières tranches de réseau configurées disponibles sur l'ensemble des zones de suivi de la première liste TAI représentant la RA prise en charge par le PLMN de desserte ; et/ou
dans lequel les une ou plusieurs secondes tranches de réseau associées aux secondes zones de suivi de l'au moins une seconde liste TAI correspondent à au moins l'une parmi :
- une ou plusieurs secondes tranches de réseau autorisées disponibles sur l'ensemble des secondes zones de suivi de l'au moins une seconde liste TAI ;
- une ou plusieurs secondes tranches de réseau configurées disponibles sur l'ensemble des secondes zones de suivi de l'au moins une seconde liste TAI.

4. Procédé selon l'une quelconque des revendications 1 à 3, dans lequel les une ou plusieurs secondes tranches de réseau associées à l'au moins une seconde liste TAI correspondent à au moins l'une des une ou plusieurs tranches de réseau demandées qui ne sont pas prises en charge dans toutes les zones de suivi de la RA mais sont disponibles sur l'ensemble des zones de suivi de l'au moins une seconde liste TAI ; et/ou
dans lequel les une ou plusieurs premières tranches de réseau associées, les une ou plusieurs secondes tranches de réseau associées ou les une ou plusieurs tranches de réseau demandées sont chacune indiquées par une information d'assistance de sélection de tranche de réseau unique, S-NSSAI.

5. Procédé selon l'une quelconque des revendications 1 à 4, dans lequel le procédé comprend en outre l'indication au nœud de réseau d'une capacité du dispositif sans fil à prendre en charge la réception de l'au moins une seconde liste TAI avec les secondes tranches de réseau associées ou la prise en charge de la disponibilité de la tranche de réseau par zones secondaires définies par une liste de seconde liste TAI ;
dans lequel, éventuellement, le procédé comprend en outre la réception à partir du nœud de réseau d'une indication selon laquelle la capacité d'une seconde liste TAI avec les secondes tranches de réseau associées ou la disponibilité de la tranche de réseau par zones secondaires définies par une liste de seconde liste TAI est activée ou désactivée.

6. Procédé selon l'une quelconque des revendications 1 à 5, dans lequel le procédé comprend en outre, lors du déplacement vers une zone de suivi à l'extérieur de la RA, l'envoi d'une seconde demande d'enregistrement incluant les une ou plusieurs tranches de réseau demandées comprenant les une ou plusieurs secondes tranches de réseau associées ; et la réception d'un message d'acceptation d'enregistrement comprenant les une ou plusieurs secondes tranches de réseau autorisées en tant que tranches de réseau enregistrées.

7. Procédé selon l'une quelconque des revendications 1 à 5, comprenant en outre :
- l'établissement d'une session PDU dans une seconde tranche de réseau associée pendant qu'elle se trouve dans une zone de suivi de la seconde liste TAI ;
- le déplacement vers une autre zone de suivi où la seconde tranche de réseau associée n'est plus prise en charge ; et
- la réalisation de l'une parmi la désactivation ou la suspension du plan utilisateur associé à la session PDU ou la libération de la session PDU.

8. Procédé selon la revendication 7, dans lequel le procédé comprend en outre le rétablissement de la session PDU, ou la reprise ou la réactivation du plan utilisateur lors du retour vers une zone de suivi de la seconde liste TAI prenant en charge la seconde tranche de réseau associée.

9. Procédé réalisé par un nœud de réseau (800) pour gérer des tranches de réseau dans un réseau de télécommunication de desserte, le procédé comprenant :
- la réception (710) d'une demande d'enregistrement provenant d'un dispositif sans fil dans le réseau de télécommunication de desserte ;
- l'envoi (720), au dispositif sans fil, d'une réponse d'enregistrement incluant :
- une première liste d'un ou plusieurs identifiants de zones de suivi, TAI, d'une ou plusieurs zones de suivi représentant une zone d'enregistrement, RA, et les une ou plusieurs premières tranches de réseau associées qui sont disponibles sur l'ensemble des une ou plusieurs zones de suivi de la RA et
- au moins une seconde liste TAI d'un ou plusieurs seconds identifiants de zones de suivi d'une ou plusieurs secondes zones de suivi et les une ou plusieurs secondes tranches de réseau associées qui sont disponibles sur l'ensemble des secondes une ou plusieurs zones de suivi de l'au moins une seconde liste TAI ;
- dans lequel les une ou plusieurs secondes zones de suivi sont au moins l'un parmi i) un sous-ensemble des une ou plusieurs zones de suivi représentant la RA et ii) différentes zones de suivi qui ne sont pas incluses dans la première liste TAI ; et
- dans lequel les une ou plusieurs secondes tranches de réseau ne sont pas prises en charge sur l'ensemble de la RA représentée par les une ou plusieurs zones de suivi de la première liste TAI.

10. Procédé selon la revendication 9, dans lequel le réseau de télécommunication est l'un d'un réseau mobile terrestre public, PLMN, ou d'un réseau non public autonome, SNPN.

11. Procédé selon la revendication 9 ou 10, dans lequel les une ou plusieurs premières tranches de réseau associées correspondent à au moins l'une parmi :
- une ou plusieurs premières tranches de réseau autorisées disponibles sur l'ensemble des zones de suivi de la première liste TAI représentant la RA et
- une ou plusieurs premières tranches de réseau configurées disponibles sur l'ensemble des zones de suivi de la première liste TAI représentant la RA prise en charge par le PLMN de desserte ; et/ou
dans lequel les une ou plusieurs secondes tranches de réseau associées correspondent à au moins l'une parmi :
- une ou plusieurs secondes tranches de réseau autorisées disponibles sur l'ensemble des secondes zones de suivi de l'au moins une seconde liste TAI ;
- une ou plusieurs secondes tranches de réseau configurées disponibles sur l'ensemble des secondes zones de suivi de l'au moins une seconde liste TAI.

12. Procédé selon l'une quelconque des revendications 9 à 11, dans lequel le procédé comprend en outre la réception à partir du dispositif sans fil d'informations indiquant une capacité du dispositif sans fil à prendre en charge la réception de l'au moins une seconde liste TAI avec les secondes tranches de réseau associées ou la prise en charge de la disponibilité de la tranche de réseau par zones secondaires définies par une liste de seconde liste TAI ;
dans lequel, éventuellement, le procédé comprend en outre l'envoi au dispositif sans fil d'une indication selon laquelle la capacité d'une seconde liste TAI avec les secondes tranches de réseau associées ou la disponibilité de la tranche de réseau par zones secondaires définies par une liste de seconde liste TAI est activée ou désactivée.

13. Procédé selon l'une quelconque des revendications 9 à 12, dans lequel le procédé comprend en outre l'enregistrement des une ou plusieurs premières tranches de réseau associées et des une ou plusieurs secondes tranches de réseau associées comme enregistrées pour le dispositif sans fil ; ou
dans lequel le procédé comprend en outre la réception d'une seconde demande d'enregistrement comprenant les une ou plusieurs tranches de réseau demandées indiquant les une ou plusieurs secondes tranches de réseau associées lorsque le dispositif sans fil se déplace vers une TA disjointe de la RA ; et l'envoi d'un message d'acceptation d'enregistrement comprenant les une ou plusieurs secondes tranches de réseau autorisées en tant que tranches de réseau enregistrées.

14. Procédé selon l'une quelconque des revendications 9 à 13, comprenant en outre :
- la détermination que le dispositif sans fil utilise une tranche de réseau pour une session PDU ;
- lors de la détection que le dispositif sans fil s'est déplacé dans une autre zone de suivi de la seconde liste TAI qui ne prend pas en charge la tranche de réseau utilisée ;
- l'information d'une fonction de gestion de session contrôlant la session PDU pour initier la désactivation ou la suspension de tout plan utilisateur associé à la session PDU.

15. Dispositif sans fil comprenant un ou plusieurs processeurs et une mémoire pour stocker des instructions qui, lorsqu'elles sont exécutées par les un ou plusieurs processeurs, dans lequel le dispositif sans fil est configuré pour :
- envoyer (610) une demande d'enregistrement à un nœud de réseau dans le réseau de télécommunication ;
- recevoir (620) une acceptation d'enregistrement comprenant :
une première liste d'un ou plusieurs identifiants de zones de suivi, TAI, d'une ou plusieurs zones de suivi représentant une zone d'enregistrement, RA, et les une ou plusieurs premières tranches de réseau associées qui sont disponibles sur l'ensemble des une ou plusieurs zones de suivi de la RA ; et
au moins une seconde liste TAI d'un ou plusieurs seconds identifiants de zones de suivi d'une ou plusieurs secondes zones de suivi et les une ou plusieurs secondes tranches de réseau associées qui sont disponibles sur l'ensemble des une ou plusieurs secondes zones de suivi de l'au moins une seconde liste TAI,
- dans lequel les une ou plusieurs secondes zones de suivi sont au moins l'un parmi i) un sous-ensemble des une ou plusieurs zones de suivi incluses dans la première liste TAI représentant la RA et ii) différentes zones de suivi qui ne sont pas incluses dans la première liste TAI ; et
- dans lequel les une ou plusieurs secondes tranches de réseau ne sont pas prises en charge sur l'ensemble de la RA représentée par les une ou plusieurs zones de suivi de la première liste TAI.
